# EUROPÄISCHE PATENTANMELDUNG

(11) **EP 0 610 985 A2**
(43) Veröffentlichungstag der Anmeldung: **17.08.1994**
(21) Anmeldenummer: 94200196.7
(22) Anmeldetag: 26.01.1994
(51) Int. Cl.: G11B 15/675, G11B 15/10

(54) **Laufwerk in einem elektromechanischen Informationsgerät**

(30) Priorität: 03.02.1993 DE 4302947
(71) Anmelder: Philips Patentverwaltung GmbH, 22335 Hamburg (DE); Philips Electronics N.V., 5621 BA Eindhoven (NL)
(72) Erfinder: Kunze, Norbert, D-20097 Hamburg (DE); Müller, Dieter, D-20097 Hamburg (DE)
(74) Vertreter: von Laue, Hanns-Ulrich, Dipl.-Ing.

(57) **Zusammenfassung**

Die Erfindung bezieht sich auf ein Laufwerk in einem elektromechanischen Informationsgerät zum Abspielen von Magnetbandkassetten (7), mit einem Lademechanismus,
- der Kassetten sowohl analoger als auch mit einem Schieber (7b) versehener digitaler (7) Spielnorm handhaben kann,
- der einen Kassettenschacht (1) aufweist, in den die Magnetbandkassette (7) von Hand bis in eine Stellung gebracht werden kann, an der die Kassette vom Lademechanismus automatisch eingezogen wird, und in dem ein Kassettenhalter (5) in Verschieberichtung der Magnetbandkassette (6. 7) verschieblich geführt ist,
- der einen Auswerfhebel (8) aufweist, der seitlich des Kassettenschachtes (1) um eine senkrecht zur Verschieberichtung verlaufende Achse (8a) schwenkbar ist und am Kassettenhalter (5) derart angreift, daß er den Kassettenhalter (5) von der Einzugsstellung an einziehen und in diese ausfahren kann, und
- der eine Hebelanordnung (9, 10) mit einem Öffnungsstift (11e) aufweist,
wobei eine Hebelanordnung (9,10) die Bewegung eines Öffnungsstiftes (11e) für den Schieber (7b) derart steuert, daß der Öffnungsstift (11e) beim Einschieben der Kassette (7) mit digitaler Norm zwischen der Einzugsstellung, in der der Schieber noch geschlossen ist, und von dort ab bis zu der Stellung, an der der automatische Einzug beginnt, in einer Bewegung entgegen der Einschubbewegung der Kassette (7) den Schieber (7b) öffnet.

## Beschreibung

Die Erfindung bezieht sich auf ein Laufwerk in einem elektromechanischen Informationsgerät zum Abspielen von Magnetbandkassetten, mit einem Lademechanismus,
- der Kassetten sowohl analoger als auch mit einem Schieber versehener digitaler Spielnorm handhaben kann,
- der einen Kassettenschacht aufweist, in den die Magnetbandkassette von Hand bis in eine Stellung gebracht werden kann, an der die Kassette vom Lademechanismus automatisch eingezogen wird, und in dem ein Kassettenhalter in Verschieberichtung der Magnetbandkassette verschieblich geführt, ist,
- der einen Auswerfhebel aufweist, der seitlich des Kassettenschachtes um eine senkrecht zur Verschieberichtung verlaufende Achse schwenkbar ist und am Kassettenhalter derart angreift, daß er den Kassettenhalter von der Einzugsstellung an einziehen und in diese ausfahren kann und
- der eine Hebelanordnung mit einem Öffnungsstift für den Schieber aufweist.

Eine Anordnung, bestehend aus einem Magnetbandkassettengerät mit einem Laufwerk und einem Lademechanismus für Magnetbandkassetten unterschiedlicher Abspielnorm ist aus der DE 40 33 095 A1 (PHD 90-197) bekannt. Die dabei aufgezeigte Problematik besteht darin, daß die herkömmlichen analog spielbaren Kassetten (AC-Kassetten) im Mittelbereich ihrer Wickelkerne in beiden Außenwänden Mulden bildende Durchbrüche aufweisen, in die ein verhältnismäßig breiter Kassettenmitnehmer eingreifen kann, während die digital spielbaren Kassetten (DC-Kassetten) an einer anderen Stelle der Kassette, nämlich an ihrer Oberseite im Bereich der Vorderkante eine nur schmale Mulde aufweisen, in die ein nur schmaler Kassettenmitnehmer einfallen kann. Außerdem hat die Digital-Kassette einen Schieber, der im Gerät geöffnet werden muß. Aus der DE 40 33 095 A1 ist es bekannt, das Öffnen mittels eines Hebelarmes vorzunehmen, der vom Kassettenhalter gesteuert wird und in der Lage ist, im Falle einer Digital-Kassette einen Öffnungsstift in eine Fangkontur der Digital-Kassette einzuführen und damit den Schieber zu öffnen. Dabei ist der Länge des Öffnungsweges im Vergleich zum Einschubweg der Digital-Kassette wenig Beachtung geschenkt worden. Es ist aber wichtig, daß das Öffnen des Öffnungsschiebers vollständig vor dem Punkt erfolgt, an dem die Cassette von dem Lademechanismus selbsttätig eingezogen wird.

Es ist Aufgabe der Erfindung, am Lademechanismus des Laufwerkes einen Öffnungsmechanismus für den Schieber von digital spielbaren Kassetten zu schaffen, der auf möglichst kurzem Weg beim Einschieben einer Digital-Kassette den Schieber öffnet und sicherstellt, daß der Schieber bei ganz ausgeschobener Kassette geschlossen ist und erst kurz vor dem Punkt, an dem der Lademechnismus die Kassette selbsttätig einzieht ganz geöffnet ist.

Die gestellte Aufgabe ist erfindungsgemäß dadurch gelöst, daß die Hebelanordnung die Bewegung des Öffnungsstiftes für den Schieber der Kassette mit digitaler Norm derart steuert, daß der Öffnungsstift beim Einschieben der Kassette in Einschubrichtung zwischen der Auswurfstellung, in der der Schieber noch geschlossen ist, und von dort ab bis zu der Stellung, an der der automatische Einzug beginnt, in einer Bewegung entgegen der Einschubbewegung der Kassette den Schieber öffnet.

Diese Anordnung hat den Vorteil, daß der Öfnnungsschieber der Digital-Kassette auf kurzer Einschublänge der Kassetten geöffnet wird und der auf den Handeinschub folgende automatischen Einzug nicht durch die Schieberöffnungskräfte belastet ist. Ein weiterer Vorteil besteht darin, daß der Schieber in der Auswurf(Eject)-Stellung noch geschlossen ist und die bis dahin noch arretierten Magnetbandwickel nicht bewegt werden können. Damit wird einem Bandsalat vorgebeugt.

Nach einer weiteren Ausgestaltung der Erfindung ist vorgesehen, daß die Hebelanordnung am Kassettenschacht verschieblich geführt ist. Die bewegliche Hebelanordnung läßt sich auf diese Weise leicht parallel zur Einschubrichtung der Kassette bewegen, wenn der automatische Kassetteneinzug beginnt.

Nach einer weiteren Ausgestaltung der Erfindung ist vorgesehen, daß eine die Hebelanordnung tragende DC-Platte vorgesehen ist, die am Kassettenschacht gegen ein Verschieben in Einschubrichtung der Kassette verriegelbar ist und bei einfahrender Kassette an der Stellung, an der der automatische Einzug beginnt, entriegelbar ist. Somit ist der Öffnungsmechnismus in der verriegelten Stellung der DC-Platte in der Lage, den Öffnungskräften des Schiebers an der Digital-Kassette zu wiederstehen und erst beim Erreichen der Stellung für den automatischen Einzug nach Entriegelung der DC-Platte verschiebbar zu werden.

Nach einer weiteren Ausgestaltung der Erfindung ist vorgesehen, daß die Hebelanordnung aus einem an der DC-Platte angelenkten Anschlaghebel und einem am Anschlaghebel angeordneten Öffnungshebel besteht, der den Öffnungsstift trägt, wobei beide Hebel derart federbelastet sind, daß sie bestrebt sind, den Öffnungsstift in Richtung auf die Kassettenvorderseite und entgegen der Einschubrichtung der Kassette zu bewegen.

Damit wird ein günstiges Übersetzungsverhältnis zum Öffnen des Schiebers an der Digital-Kassette möglich, weil sich der Öffnungshebel noch einmal getrennt bewegen und der Einschubbewegung der Kassette entgegengerichtet laufen kann.

Nach einer weiteren Ausgestaltung der Erfindung ist vorgesehen, daß an dem Öffnungshebel Mittel vorgesehen sind, die verhindern, daß der Öffnungsstift beim Einschieben einer Analog-Kassette über das dünne Teil dieser Kassette schwenken kann, wobei der Öffnungsstift immer an der Außenkante der Kassette anliegt, während beim Einschieben einer Digital-Kassette der Öffnungsstift in den Digital-Öffnungsschlitz einfallen kann. Toleranzen an Analog-Kassetten sind allgemein sehr undefiniert und werden auf diese Weise überwunden.

Nach einer weiteren Ausgestaltung der Erfindung ist vorgesehen, daß die Mittel aus einer Schräge, die den Öffnungshebel und damit den Öffnungsstift beim Einschieben einer Digital-Kassette anhebt, ihn jedoch beim Einschieben einer Analog-Kassette in der Ausgangshöhe stehen läßt, und aus einer Anschlagnase bestehen, die beim Einschieben einer Analog-Kassette gegen deren dickes Teil stößt und damit das Einschwenken des Öffnungshebels über die Analog-Kassette verhindert. Damit werden undefinierte Toleranzen an der AC-Kassette überwunden.

Die Erfindung wird anhand der Zeichnung näher erläutert. Es zeigen:
Fig. 1 einen Teil des Lademechanismus eines Laufwerkes zum Abspielen von Magnetbandkassetten zweier Spielnormen mit einem Kassettenschacht, einem Kassettenschieber und einem Kassettenhalter bei in der Ejectstellung befindlicher Digital-Kassette,
Fig. 2 einen Schnitt längs der Linie II-II nach Fig. 1,
Fig. 3 das Zusammenwirken der Teile des Lademechanismus in einer Stellung, in der ein Öffnungsmechanismus für einen Schieber der Digital-Kassette begonnen hat, diesen zu öffnen,
Fig.4 eine Ansicht IV nach Fig.1, die eine Nase und einen Öffnungsstift am Vorderteil des Öffnungsmechanismus vor der Digital-Kassette zeigt, noch bevor der Öffnungsstift, wie in Fig.3 dargestellt, in eine Fangkontur der Digital-Kassette hineingehoben ist,
Fig.5 eine Seitenansicht V des Öffnungsmechanismus neben der Digital-Kassette in der Stellung nach Fig.4,
Fig.6 den Lademechanismus nach Fig.1 in einer Stellung, in der der Öffnungsstift in eine Rastkontur der Digital-Kassette eingelaufen ist und in der sich der Übergang von dem Handeinschub zum automatischen Einzug vollzieht,

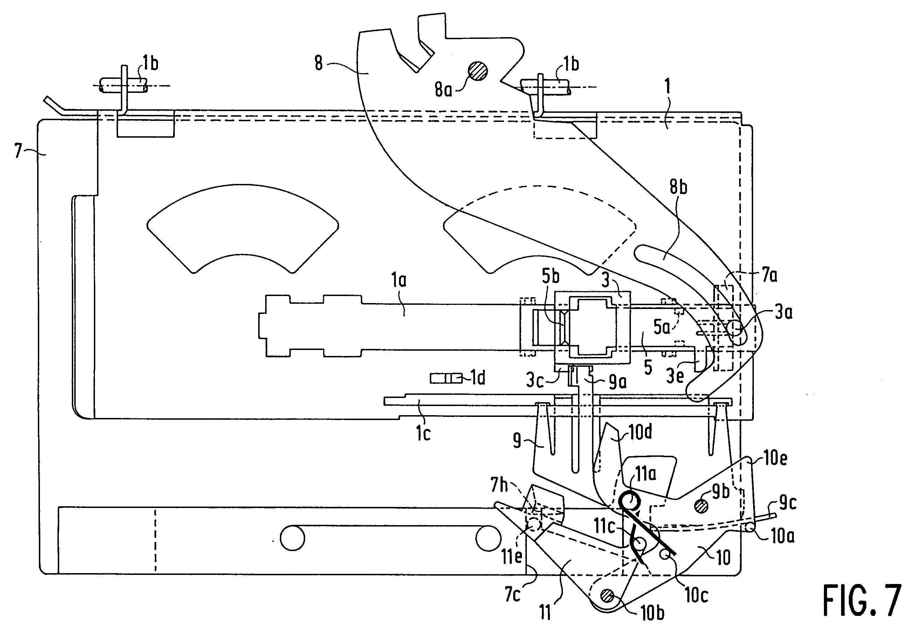

Fig.7 den Lademechanismus nach Fig.1 bei bis zum Endanschlag eingezogener Digital-Kassette,
Fig.8 den Lademechanismus nach Fig.1 mit einer Analog-Kassette in ihrer Auswurfstellung,
Fig.9 den Lademechanismus nach Fig.8 mit der Analog-Kassette zu Beginn des Einschubs der Kassette, die Funktion der Anschlagnase am Öffnungshebel zeigend,
Fig.10 den Lademechanismus nach Fig.8 mit bis zum Einzugsende eingezogener Analog-Kassette.

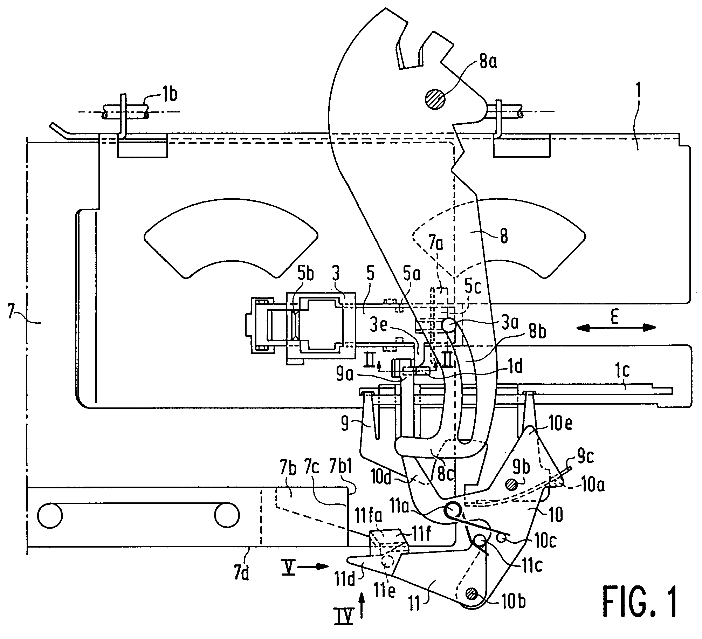

In Fig.1 ist ein Teil eines Lademechanismus eines Laufwerkes zum Spielen von AC (Analog)- und DC (Digital)-Magnetbandkassetten dargestellt. Es ist ein Kassettenschacht 1 vorgesehen, in dem in einem Schlitz 1a in Einschub- und Auswurfrichtung E ein Kassettenschieber 3 geführt ist. Der Kassettenschacht 1 ist um eine Schwenkachse 1b im nicht dargestellten Chassis des Laufwerkes verschwenkbar. Im Kassettenschieber 3 ist wiederum ein Kassettenhalter 5 kippbar angeordnet. Die Richtung E verläuft parallel zur Schenkachse 1b. Der Kassettenhalter 5 ist um eine Wippachse 5a im Kassettenschieber 3 verkippbar, um entweder einen an ihm vorgesehenen Kassettenmitnehmer 5b in eine Mulde 6a einer AC-Kassette 6 oder einen an ihm vorgesehenen Kassettenmitnehmer 5c in eine Mulde 7a einer DC-Kassette 7 einzuführen. Seitlich des Kassettenschachtes 1 ist im nicht dargestellten Chassis des Laufwerkes eine Aufwurfhebelachse 8a senkrecht zur Verschieberichtung E gelagert, um die ein Auswurfhebel 8 über den Kassettenschacht 1 hinwegschwenkbar ist. Im Auswerfhebel ist ein Längsschlitz 8b vorgesehen, in den ein Stift 3a des Kassettenschiebers 3 eingreift. Der Stift 3a bewegt den Auswerfhebel 8 damit synchron zu dem Kassettenschieber 3.

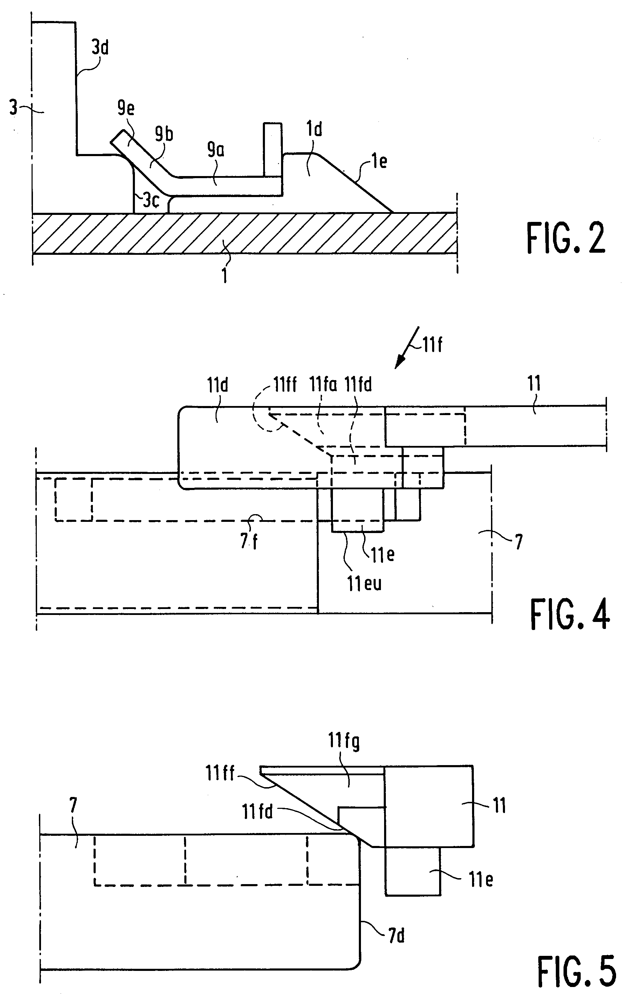

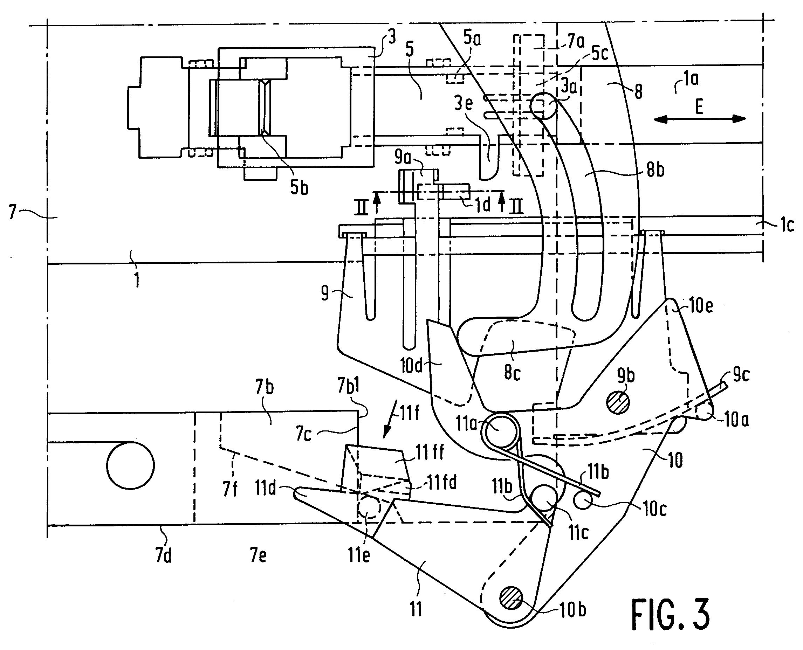

Am Kassettenschacht 1 ist parallel zum ersten Schieberschlitz 1a ein DC-Plattenschlitz 1c angeordnet. In diesem DC-Plattenschlitz 1c ist eine DC-Platte 9 verschieblich. Die DC-Platte 9 ist entsprechend der Detaildarstellung in Fig.2 am Kassettenschacht 1 verriegelbar mittels einer Zunge 9a, die hinter einer Nase 1d des Kassettenschachtes 1 verasten kann.

An der DC-Platte 9 befindet sich eine Lagerachse 9b, auf der ein Anschlaghebel 10 gelagert ist. Eine Feder 9c der DC-Platte 9 stößt gegen eine Anschlagstelle 10a des Anschlaghebels 10 und ist bestrebt, diesen mit einem Ausleger 10d im Uhrzeigersinn gegen eine Anschlagwand 8c des Auswurfhebels 8 zu drücken. In Fig.1 ist dieser Zustand dargestellt.

Der Anschlaghebel 10 weist eine Anschlaghebelachse 10b auf, auf der ein Öffnungshebel 11 gelagert ist. Eine Schlingfeder 11a drückt mit ihren Schlingfederarmen 11b gegen Anschlagnoppen 10c des Anschlaghebels 10 bzw.11c des Öffnungshebels 11 und zwar derart, daß auch der Öffnungshebel 11 im Uhrzeigersinn belastet ist. Nahe dem freien Ende des Öffnungshebels 11, das als Nase 11d ausgebildet ist, befinden sich ein Öffnungsstift 11e und ein Führungsblock 11f, der mit Schrägen 11fa, 11fd, 11ff und 11fg versehen ist.

Die DC-Platte 9, der Anschlaghebel 10 und der Öffnungshebel 11 bilden zusammen eine Hebelanordnung 9/10, die der Detektion der Spielnorm der jeweils eingeschobenen Kassette und deren Behandlung während des Einschiebens dienen. Zu dieser Behandlung gehört bei der AC-Kassette, daß die Hebelanordnung an der Kassettenvorderseite funktionslos entlanggleitet, während die Hebelanordnung beim Einschieben einer DC-Kassette in eine Fangkontur dieser Kassette eingreifen muß, um deren Schieber aus der Schließstellung in die geöffnete Stellung zu überführen.

In Fig.1 ist der Schieber 7b in seiner Schließstellung dargestellt. Seine Vorderkante 7b1 liegt dabei federbelastet an einer Kontur 7c der DC-Kassette 7 an. Der Führungsblock 11f liegt mit einer Digitalschräge 11fd vor der Vorderwand 7d der DC-Kassette 7. Wird nun die DC-Kassette 7 aus der in Fig.1 dargestellten Auswurfstellung weiter eingeschoben, dann fährt die Vorderwand 7d an der Digitalschräge 11fd entlang. Gleichzeitig nimmt der Kassettenschieber 3 den Auswerfhebel 8 in Einschubrichtung mit, sodaß der Ausleger 10d die Anschlagwand 8c verläßt.

Die nun erreichte gegenseitige Stellung der Teile des Lademechanismus ist in Fig.3 dargestellt. Der Anschlaghebel 10 und der Öffnungshebel 11 schwenken, getrieben durch die Kraft der Feder 9c, im Uhrzeigersinn weiter. Die Digitalschräge 11fd hat den Öffnungsstift 11e aus der Stellung nach Fig.4 und 5, in der dessen Unterkante 11eu noch tiefer als die Bodenfläche 7e der Kassettenfangkontur 7f lag, angehoben bis etwas über die Höhe der Bodenfläche 7e. Der Öffnungsstift 11e ist damit in die Fangkontur 7f eingefallen und vor die Vorderkante 7b1 des Öffnungsschiebers 7b gelangt.

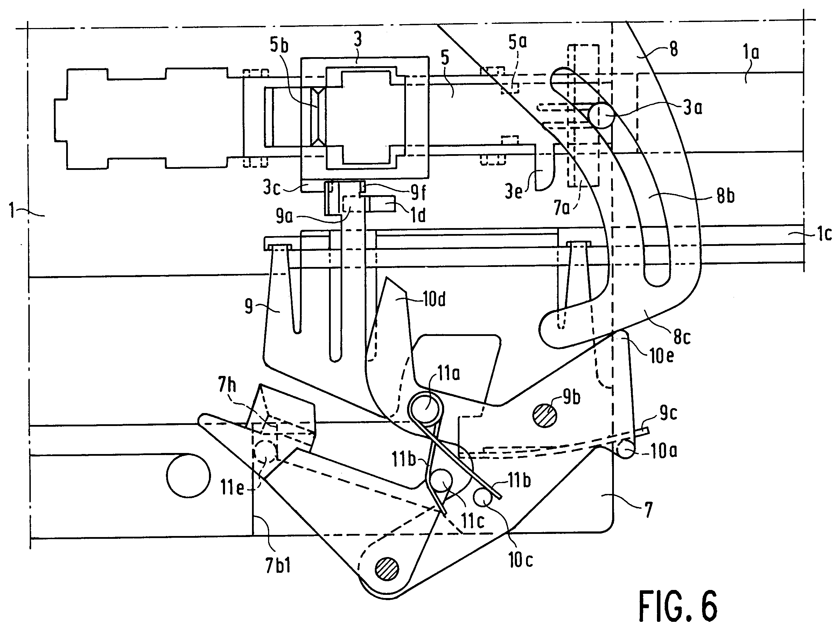

Die DC-Kassette 7 wird weiter eingeschoben und der Öffnungsstift 11e wandert, zum Einen getrieben über die Kraft der Schlingfeder 11a und zum anderen durch die einziehende Wirkung der Kante 7b1 der DC-Kassette 7 weiter in die Fangkontur 7c ein, wie aus Fig. 6 zu ersehen ist. Dabei wird der Anschlaghebel 10 durch eine Anschlagwand 8c des Auswurfhebels 8 über ihre Nase 10e weiter im Uhrzeigersinn verschwenkt, wodurch der Öffnungshebel 11 entgegen der Einschubrichtung der Kassette 7 bewegt wird. Der Öffnungsstift 11e fällt schließlich in eine Rastkontur 7h, in der er den Schieber 7b gegen ein Zurückfahren dadurch sichert, daß er zwischen der Rastkontur 7h und der Schiebervorderkante 7b1 festgesetzt ist. Dieses Festsetzen hat den Sinn, daß die nicht dargestellte Feder des Öffnungsschiebers 7b über den Öffnungsstift 11e gegen die Rastkontur 7h drückt und damit nicht mehr in ihrer Schließrichtung auf das System wirken kann.

In Fig. 6 ist die DC-Platte noch am Kassettenschacht 1 verrastet. Der Öfnungsschieber 7b ist völlig geöffnet. Dies ist die Stellung, in der der Übergang zwischen dem Hand-Einschub der Kassette 7 und dem automatischen Einzug vor sich geht. Der Bewegungsweg der Kassette 7 zwischen der Auswurfstellung und der Stellung, in der das Laufwerk mit seinem automatischen Einzug beginnt, beträgt nur wenige, beispielsweise 15 mm. Auf diesem verhältnismäßig kurzen Weg war das Öffnen des Öffnungsschiebers 7b vollzogen, weil der Öffnungsstift 11e sich entgegen der Einschubbewegung der Kassette 7 vorschob. Die weiter in Einzugsrichtung bewegte Kassette 7 nimmt den Kassettenhalter 5 und über diesen den Kassettenschieber 3 mit. Dabei fährt, wie aus Fig.2 und Fig.6 zu ersehen ist, eine Kante 3c des Kassettenschiebers 3 gegen die Schräge 9d der Zunge 9a der DC-Platte 9 und hebt diese über die Nase 1d des Kassettenschachtes 1. Die DC-Platte 9 wird damit freigegeben und kann sich in Einschubrichtung verschieben. Dies geschieht dadurch, daß eine Mitnahmewand 3d gegen die Vorderkante 9e der Zunge 9a der DC-Platte stößt und diese beim weiteren Einziehen der Kassette mitnimmt (Fig.2). Das weitere Einziehen der Kassette übernimmt der Auswurfhebel 8, welcher über einen nicht dargestellten Mechanismus seine zu Beginn der Einschub-Bewegung ausschiebend gerichtete Kraft umgekehrt hat.

Zum Ausschieben der Kassette 7 wird der Auswurfhebel 8 über einen nicht dargestellten Mechanismus im Uhrzeigersinn verdreht, wodurch der Kassettenschieber 3 mit der Kassette 7 ausfährt. Dabei gleitet der Öffnungsstift 11e des Öffnungshebels 11 aus der Rastkontur 7h der Kassette heraus und der Schieber 7b beginnt die Kassette zu verschließen. Eine Auswurfkante 3e des Kassettenschiebers 3 stößt gegen eine Ausschubwand 9f der DC-Platte 9 und schiebt diese zurück in die Auswurfstellung nach Bild 1, wobei die Rastzunge 9a über die Schräge 1e der Nase 1d hinwegläuft und sich hinter dieser verrastet. Die Kassette kann somit bei bereits geschlossenen Schieber 7b entnommen werden.

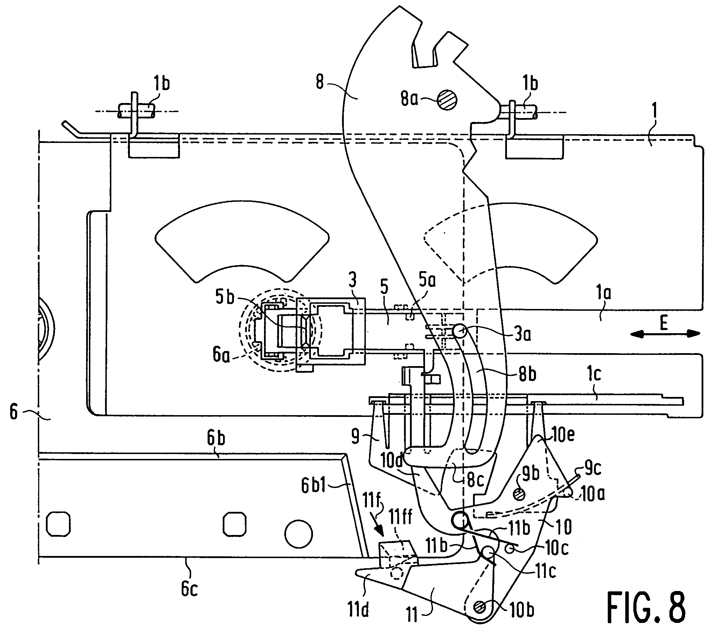

Bei der Darstellung nach Fig.8 ist in den Kassettenschacht 1 eine AC-Kassette 6 mit der für diese typischen Kopfverdickung 6b eingeschoben. Der AC-Kassettenmitnehmer 5b ist in die AC-Mulde eingefallen. Der Öffnungsstift 11e hängt so tief, wie es in Fig.4 dargestellt ist. Die DC-Platte 9 ist mit ihrer Rastzunge 9a hinter der Nase 1d (Fig.2) verrastet.

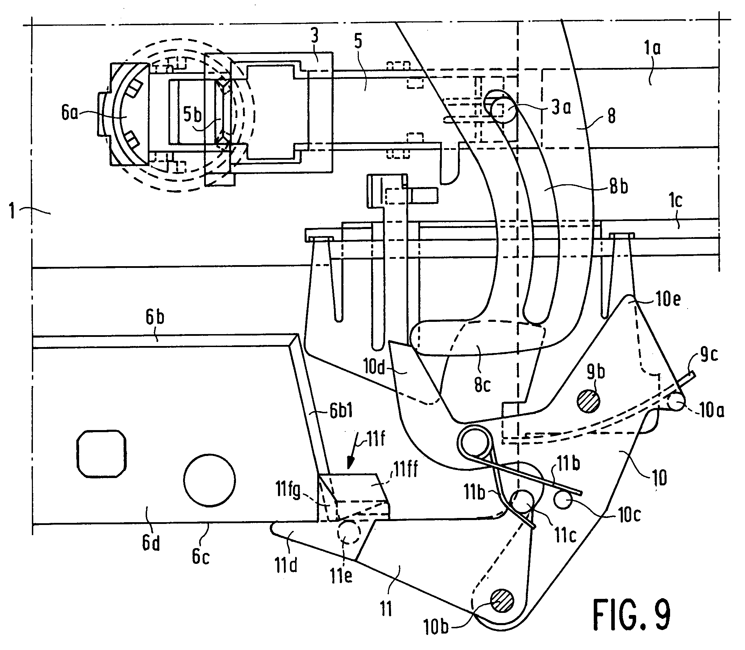

Wird nun die AC-Kassette 6 aus der in Fig.8 ersichtlichen Stellung nach rechts verschoben in die Stellung nach Fig.9, dann bleibt der Öffnungsstift 11e auf der Höhe nach Fig.4 stehen, weil die Digitalschräge 11fd insgesamt höher steht, als der dünne Teil der AC-Kassette und somit den Öffnungshebel 11 nicht anheben kann. Eine Liftschräge 11fg des Öffnungshebels 11 steht vor einer Schräge 6b1 an der Verdickung 6b der AC-Kassette. Diese hebt beim weiteren Einschieben der Cassette den Öffnungshebel 11 an, so daß der Führungsblock 11f über dem dicken Teil der AC-Kassette zu liegen kommt. Eine Nase 11d am Öffnungshebel 11 stößt gegen die Vorderkante 6d an der Verdickung der AC-Cassette und läuft an dieser beim weiteren Einschieben entlang.

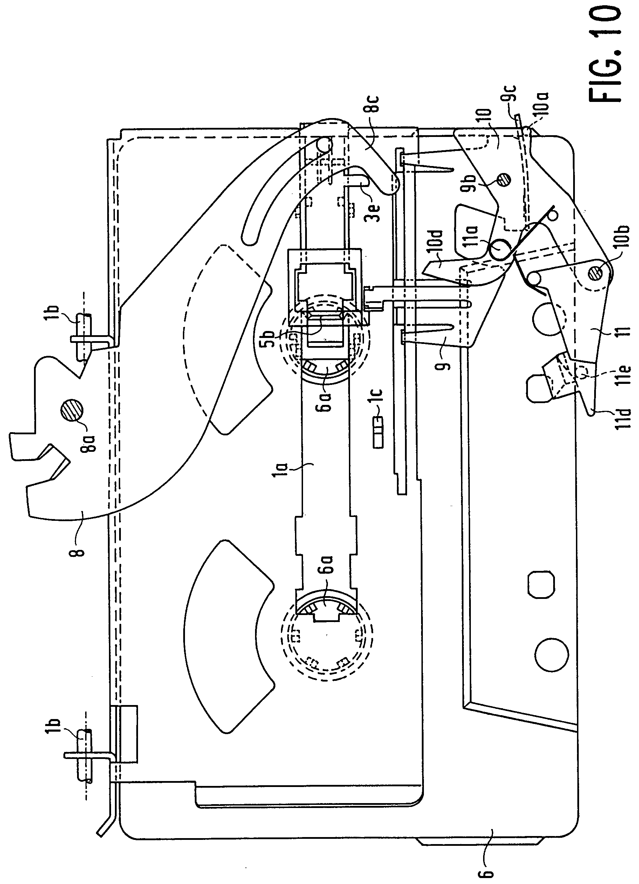

In der Stellung nach Fig.9 vollzieht sich der Übergang vom Handeinschub zum automatischen Einzug. Wie beim DC-Einzug löst sich nun die DC-Platte und fährt beim weiteren, nun automatischen Einfahren der AC-Kassette nach rechts in die Einzugsendstellung entsprechend Fig.10. Der Öffnungshebel 11 und der Öffnungsstift 11e bleiben sicher vor der Kassettenvorderwand 6c.

Der Auswurf der AC-Cassette erfolgt analog zum Auswurf der DC-Kassette nur mit dem Unterschied, daß der Öffnungsstift 11e des Öffnungshebels immer vor der Kassette liegt.

## Patentansprüche

1. Laufwerk in einem elektromechanischen Informationsgerät zum Abspielen von Magnetbandkassetten (6,7), mit einem Lademechanismus,
- der Kassetten sowohl analoger (6) als auch mit einem Schieber (7b) versehener digitaler (7) Spielnorm handhaben kann,
- der einen Kassettenschacht (1) aufweist, in den die Magnetbandkassette (6,7) von Hand bis in eine Stellung gebracht werden kann, an der die Cassette vom Lademechanismus automatisch eingezogen wird, und in dem ein Kassettenhalter (5) in Verschieberichtung der Magnetbandkassette (6,7) verschieblich geführt ist,
- der einen Auswerfhebel (8) aufweist, der seitlich des Kassettenschachtes (1) um eine senkrecht zur Verschieberichtung verlaufende Achse (8a) schwenkbar ist und am Kassettenhalter (5) derart angreift, daß er den Kassettenhalter (5) von der Einzugsstellung an einziehen und in diese ausfahren kann und
- der eine Hebelanordnung (9,10) mit einem Öffnungsstift (11e) aufweist,
dadurch gekennzeichnet, daß die Hebelanordnung (9,10) die Bewegung des Öffnungsstiftes (11e) für den Schieber (7b) derart steuert, daß der Öffnungsstift (11e) den Schieber (7b) beim Einschieben der Kassette (7) mit digitaler Norm zwischen der Einzugsstellung, in der der Schieber noch geschlossen ist, und von dort ab bis zu der Stellung, an der der automatische Einzug beginnt, in einer Bewegung entgegen der Einschubbewegung der Kassette (7) öffnet.

2. Laufwerk nach Anspruch 1, dadurch gekennzeichnet, daß die Hebelanordnung (9,10) am Kassettenschacht (1) verschieblich geführt ist.

3. Laufwerk nach Anspruch 1 oder 2, dadurch gekennzeichnet, daß eine die Hebelanordnung (9,10) tragende DC-Platte (9) vorgesehen ist, die am Kassettenschacht (1) gegen ein Verschieben in Einschubrichtung der Kassette (6,7) verriegelbar ist und bei einfahrender Kassette (6,7) an der Stellung, an der der automatische Einzug beginnt, entriegelbar ist.

4. Laufwerk nach einem der Ansprüche 1 oder 2, dadurch gekennzeichnet, daß die Hebelanordnung (9/10) aus einem an der DC-Platte (9) angelenkten Anschlaghebel (10) und einem am Anschlaghebel (10) angeordneten Öffnungshebel (11) besteht, der den Öffnungsstift (11e) trägt, wobei beide Hebel (10,11) derart federbelastet sind, daß sie bestrebt sind, den Öffnungsstift (11e) in Richtung auf die Kassettenvorderseite (6b, 7b1) und entgegen der Einschubrichtung der Kassette ((6,7) zu bewegen.

5. Laufwerk nach einem der Ansprüche 1 bis 4, dadurch gekennzeichnet, daß an dem Öffnungshebel (11) Mittel (11f) vorgesehen sind, die verhindern, daß der Öffnungsstift (11e) beim Einschieben einer Analog-Kassette (6) über das dünne Teil dieser Kassette (6) schwenken kann, wobei der Öffnungsstift (11e) immer an der Außenkante der Kassette (6) anliegt, während beim Einschieben einer Digital-Kassette (7) der Öffnungsstift (11e) in eine DC-Fangkontur (7c) einfallen kann.

6. Laufwerk nach Anspruch 5, dadurch gekennzeichnet, daß die Mittel (11f) aus einer Schräge (11ff), die den Öffnungshebel (11) und damit den Öffnungsstift (11e) beim Einschieben einer Digital-Kassette (7) anhebt, diese Teile jedoch beim Einschieben einer Analog-Kassette (6) in der Ausgangshöhe stehen läßt, und aus einer Anschlagnase (11d) bestehen, die beim Einschieben einer Analog-Kassette (6) gegen deren dickes Teil (6b) stößt und damit das Einschwenken des Öffnungshebels über die Analog-Kassette (6) verhindert.
